# EUROPÄISCHE PATENTSCHRIFT

(11) **EP 2 923 048 B1**
(45) Veröffentlichungstag und Bekanntmachung des Hinweises auf die Patenterteilung: **19.04.2017**
(21) Anmeldenummer: 13773188.1
(22) Anmeldetag: 01.10.2013
(51) Int. Cl.: F01N 3/20, F01N 3/023, F01N 3/10, F01N 11/00, F02D 41/00

(54) **VERFAHREN ZUM ÜBERWACHEN DER BILDUNG VON STICKSTOFFDIOXID AN EINEM OXIDATIONSKATALYSATOR UND ABGASANLAGE**
METHOD FOR MONITORING THE FORMATION OF NITROGEN DIOXIDE AT AN OXIDATION CATALYTIC CONVERTER, AND EXHAUST SYSTEM
PROCÉDÉ DE SURVEILLANCE DE LA FORMATION DE DIOXYDE D'AZOTE SUR UN CATALYSEUR D'OXYDATION, ET SYSTÈME D'ÉCHAPPEMENT

(30) Priorität: 24.11.2012 DE 102012022944
(43) Veröffentlichungstag der Anmeldung: 30.09.2015
(73) Patentinhaber: Daimler AG, 70327 Stuttgart (DE)
(72) Erfinder: KEPPELER, Berthold, 73277 Owen (DE)
(74) Vertreter: JENSEN & SON
(86) Internationale Anmeldenummer: PCT/EP2013/002949
(87) Internationale Veröffentlichungsnummer: WO 2014/079523

(56) Entgegenhaltungen:
- EP-A2- 2 525 060
- WO-A1-2009/092429
- DE-A1-102010 050 406
- US-A1- 2009 158 813

## Beschreibung

Die Erfindung betrifft ein Verfahren zum Überwachen der Bildung von Stickstoffdioxid an einem in einer Abgasanlage eines Fahrzeugs angeordneten Oxidationskatalysator. Mittels einer Abgasnachbehandlungseinrichtung wird ein Gehalt von Stickoxiden im Abgas durch Umsetzen der Stickoxide verringert, und der Gehalt der Stickoxide im Abgas wird gemessen. Des Weiteren betrifft die Erfindung eine Abgasanlage für ein Fahrzeug.

Der Anteil an Stickstoffdioxid im Abgas, welches in eine zum Verringern des Gehalts von Stickoxiden im Abgas ausgebildete Abgasnachbehandlungseinrichtung, etwa einen SCR-Katalysator, einströmt, beeinflusst die Aktivität der Abgasnachbehandlungseinrichtung im Hinblick auf das Umsetzen der Stickoxide. Bei der SCR-Reaktion (selective catalytic reduction, selektive katalytische Reduktion) im SCR-Katalysator ist die selektive, katalytische Reduktionsreaktion von Stickoxiden mit Ammoniak zu Stickstoff und Wasser aufgrund unterschiedlicher Reaktionspfade für Stickstoffmonoxid und Stickstoffdioxid vom Gehalt an Stickstoffdioxid im Abgas abhängig. Aufgrund gesetzlicher Regelungen, etwa der US-amerikanischen Umweltbehörden, soll daher im Rahmen einer On-Board-Diagnose die Bildung von Stickstoffdioxid am Oxidationskatalysator überwacht werden.

Die US 2009/0158813 A1 beschreibt ein Verfahren der Überwachung eines Oxidationskatalysators im Hinblick auf die Bildung von Stickstoffdioxid, bei welchem stromaufwärts und stromabwärts des Oxidationskatalysators angeordnete Sensoren unterschiedlich auf Stickstoffmonoxid und Stickstoffdioxid ansprechen. Auf diese Weise soll anhand der Signale der Sensoren auf die Bildung von Stickstoffdioxid am Oxidationskatalysator rückgeschlossen werden.

Da jedoch der Gehalt an Stickstoffdioxid nicht direkt mittels eines Sensors gemessen werden kann, ist dieses Verfahren mit einer gewissen Ungenauigkeit behaftet.

Möglichkeiten, die Stickstoffdioxid-Bildung am Oxidationskatalysator auf indirektem Wege zu bestimmen, etwa durch Ermitteln der Aktivität des Oxidationskatalysators im Hinblick auf die Oxidation anhand einer Exothermieüberwachung, liefern ebenfalls nur vergleichsweise ungenaue Ergebnisse. Dasselbe gilt für die Abschätzung der Aktivität eines SCR-Katalysators mithilfe von Stickoxid-Sensoren, aus welcher eine Stickstoffdioxidkonzentration abgeschätzt werden soll. Auch hierdurch ist keine zuverlässige Diagnose der Stickstoffdioxid-Bildung am Oxidationskatalysator möglich.

Aufgabe der vorliegenden Erfindung ist es daher, ein Verfahren der eingangs genannten Art sowie eine zur Durchführung des Verfahrens ausgebildete Abgasanlage zu schaffen, welches beziehungsweise welche eine besonders zuverlässige Überwachung der Bildung von Stickstoffdioxid ermöglicht.

Diese Aufgabe wird durch ein Verfahren mit den Merkmalen des Patentanspruchs 1 und durch eine Abgasanlage mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren wird zunächst das mit einem ersten Abgasvolumenstrom durch den Oxidationskatalysator korrespondierende Umsetzen der Stickoxide erfasst. Dann wird der Abgasvolumenstrom verändert, und das mit der Veränderung des Abgasvolumenstroms sich ändernde Umsetzen der Stickoxide wird erfasst. Anhand des jeweiligen Umsetzens der Stickoxide bei den unterschiedlichen Abgasvolumenströmen durch den Oxidationskatalysator hindurch wird auf die Bildung von Stickstoffdioxid an dem Oxidationskatalysator rückgeschlossen. Hierbei wird ein vorbestimmter Zusammenhang zwischen dem Umsetzen der Stickoxide und einem Anteil von Stickstoffdioxid an den Stickoxiden im Abgas berücksichtigt.

Dem liegt die Erkenntnis zugrunde, dass die Bildung von Stickstoffdioxid am Oxidationskatalysator sehr sensibel auf eine Änderung der Raumgeschwindigkeit am Oxidationskatalysator reagiert. Die Raumgeschwindigkeit ist das Verhältnis von Abgasvolumenstrom und Volumen des Oxidationskatalysators, und sie wird üblicherweise in der Einheit 1/h angegeben. Eine Erhöhung der Raumgeschwindigkeit bedingt eine Verringerung der Stickstoffdioxidbildung und umgekehrt. Diese Abhängigkeit der Bildung von Stickstoffdioxid am Oxidationskatalysator von dem Abgasvolumenstrom durch den Oxidationskatalysator wird vorliegend genutzt, um eine belastbare, also besonders zuverlässige Überwachung oder Diagnose der Bildung von Stickstoffdioxid durchzuführen. Eine Änderung des Abgasvolumenstroms führt nämlich zu einer Änderung der Bildung von Stickstoffdioxid am Oxidationskatalysator. Als Folge verändert sich dadurch das Umsatzverhalten der Abgasnachbehandlungseinrichtung, und diese Änderungen des Umsetzens der Stickoxide an der Abgasnachbehandlungseinrichtung sind mittels zum Erfassen des Gehalts an Stickoxiden im Abgas ausgelegten Sensoren messbar.

Aufgrund eines für den jeweiligen Typ der Abgasnachbehandlungseinrichtung bekannten Zusammenhangs zwischen dessen Stickoxidumsatzverhalten und dem Stickstoffdioxid zu Stickoxid-Verhältnis (NO₂ / NOₓ) kann dann besonders genau und verlässlich auf die Bildung von Stickstoffdioxid an dem der Abgasnachbehandlungseinrichtung vorgeschalteten Oxidationskatalysator geschlossen werden. Es kann also über die Abhängigkeit der Aktivität der Abgasnachbehandlungseinrichtung im Hinblick auf das Umsetzen von Stickoxiden von dem Stickstoffdioxid-Anteil im Abgas auf die Stickstoffdioxid-Bildungsaktivität des Oxidationskatalysators rückgeschlossen werden. Dadurch ist eine besonders zuverlässige Überwachung der Bildung von Stickstoffdioxid am Oxidationskatalysator ermöglicht. Die Abgasnachbehandlungseinrichtung umfasst dabei bevorzugt wenigstens eine als SCR-Katalysator ausgebildete Abgasreinigungskomponente, die in eine selektive katalytische Reduktion von Stickoxiden mit Ammoniak zu überwiegend Stickstoff bei oxidierenden Bedingungen katalysieren kann. Dabei ist die Abgasnachbehandlungseinrichtung stromab des Oxidationskatalysators angeordnet.

In der Erfindung wird der Abgasvolumenstrom durch den Oxidationskatalysator hindurch verändert, indem ein Anteil einer Niederdruck-Abgasrückführungsrate an einer Gesamt-Abgasrückführungsrate verändert wird. Die Gesamt-Abgasrückführungsrate setzt sich aus einer Hockdruck-Abgasrückführungsrate und der Niederdruck-Abgasrückführungsrate zusammen. Bei der Hochdruck-Abgasrückführung wird das rückzuführende Abgas vor dem Erreichen des Oxidationskatalysators vom Abgasstrom abgezweigt und stromabwärts eines die Zuluft für eine Verbrennungskraftmaschine des Fahrzeugs verdichtenden Verdichters in die Zuluft eingebracht. Demgegenüber wird bei der Niederdruck-Abgasrückführung ein Teilstrom des Abgases stromabwärts von der Abgasnachbehandlungseinrichtung und somit auch stromabwärts des Oxidationskatalysators aus dem Abgasstrom abgezweigt und stromaufwärts des Verdichters in die Zuluft eingebracht.

Wird nun bei einer bestimmten Gesamt-Abgasrückführungsrate die Niederdruck-Abgasrückführungsrate erhöht, so verringert sich die Hochdruck-Abgasrückführungsrate. Dies führt dazu, dass weniger Abgas stromaufwärts des Oxidationskatalysators abgezweigt wird. In der Folge erhöht sich der Abgasvolumenstrom durch den Oxidationskatalysator. Dies geschieht, ohne dass ein Fahrer des Fahrzeugs diese Erhöhung des Abgasvolumenstroms durch den Oxidationskatalysator bemerkt. Es kann also durch Verändern der Niederdruck-Abgasrückführungsrate sehr einfach und zuverlässig die Raumgeschwindigkeit verändert und so Einfluss auf die Bildung von Stickstoffdioxid am Oxidationskatalysator genommen werden. Die davon abhängige Konversion oder Umsetzung der Stickoxide in der Abgasnachbehandlungseinrichtung kann dann mithilfe von Stickoxid-Sensoren gemessen werden. Auf diese Weise kann im Fahrbetrieb besonders unauffällig und zugleich zuverlässig die Bildung von Stickstoffdioxid am Oxidationskatalysator überwacht werden.

Als weiter vorteilhaft hat es sich gezeigt, wenn durch Vergleichen der ermittelten Bildung von Stickstoffdioxid an dem Oxidationskatalysator mit einer für die jeweiligen Abgasvolumenströme erwarteten Bildung von Stickstoffdioxid auf einer Alterungszustand des Oxidationskatalysators rückgeschlossen wird. Entspricht nämlich die tatsächliche Stickstoffdioxid-Bildung nicht der erwarteten Stickstoffdioxid-Bildung, so ist dies als ein Indiz für eine Alterung und somit Verschlechterung der Konversionsrate des Oxidationskatalysators zu werten. Wenn der Alterungszustand des Oxidationskatalysators mit einer besonders starken Verringerung der Bildung von Stickstoffdioxid einhergeht, so kann der Oxidationskatalysator als defekt erkannt werden. Entsprechend kann ein Fahrzeugnutzer auf die Notwendigkeit eines Austauschens des Oxidationskatalysators aufmerksam gemacht werden.

Bevorzugt wird das Umsetzen der Stickoxide bei den unterschiedlichen Abgasvolumenströmen bestimmt, während eine Temperatur an der Abgasnachbehandlungseinrichtung vorliegt, wie sie sich beim thermischen Regenerieren eines in der Abgasanlage angeordneten Partikelfilters an der Abgasnachbehandlungseinrichtung einstellt. Beim Regenerieren des Partikelfilters liegen nämlich stromaufwärts der Abgasnachbehandlungseinrichtung besonders hohe Temperaturen, insbesondere Temperaturen von mehr als 500 °C vor. Bei diesen Temperaturen besitzt eine als SCR-Katalysator ausgebildete Abgasnachbehandlungseinrichtung keine Speicherfähigkeit für Ammoniak mehr. Zudem ist am Oxidationskatalysator die Gleichgewichtsreaktion:

NO + 1/2 O₂ ↔ NO₂

thermodynamisch nahezu vollständig hin zum Stickstoffmonoxid verschoben.

Durch das Einstellen von Bedingungen, wie sie beim thermischen Regenerieren des Partikelfilters vorliegen, wird also sichergestellt, dass äußere Faktoren wie der Anteil von Stickstoffdioxid in dem Abgas, welches der Abgasnachbehandlungseinrichtung zugeführt wird, sowie die Beladung der Abgasnachbehandlungseinrichtung mit Ammoniak keinen störenden oder verfälschenden Einfluss auf die Aktivität der Abgasnachbehandlungseinrichtung beim Umsetzen der Stickoxide haben. Der Umsatz der Stickoxide mittels der Abgasnachbehandlungseinrichtung kann also bei einer Temperatur von mehr als 500 °C eingangsseitig der Abgasnachbehandlungseinrichtung ohne aufgrund gespeicherten Ammoniaks oder aufgrund des Stickstoffdioxidanteils störende Rahmenbedingungen im Abgas ermittelt werden.

Es ist also günstig, wenn beim Ermitteln des Umsetzens der Stickoxide bei den unterschiedlichen Abgasvolumenströmen Bedingungen vorliegen, wie sie sich im Verlauf eines aktiven thermischen Regenerierens des Partikelfilters einstellen. Von besonderem Vorteil ist es jedoch, wenn der Partikelfilter tatsächlich regeneriert wurde, wenn also das Umsetzen der Stickoxide bei den unterschiedlichen Abgasvolumenströmen im insbesondere direkten Anschluss an das thermische Regenerieren des Partikelfilters bestimmt wird. Dann liegt nämlich im Partikelfilter keine Rußbeladung vor, welche ebenfalls einen störenden Einfluss auf die Aktivität der Abgasnachbehandlungseinrichtung haben könnte. Die Konversion der Stickoxide mittels der Abgasnachbehandlungseinrichtung kann auch während des thermischen Regenerierens des Partikelfilters ermittelt werden, indem der Gehalt an Stickoxiden im Abgas wenigstens hinter der Abgasnachbehandlungseinrichtung gemessen wird und der messwert mit einem vor der Abgasnachbehandlungseinrichtung vorhandenen Stickoxidgehalt verglichen wird.

Hierbei hat es sich als vorteilhaft gezeigt, wenn ein vor dem thermischen Regenerieren oder im Anschluss an das thermische Regenerieren des Partikelfilters im Abgas vorliegender Gehalt an Ammoniak im Abgas beim Erfassen des Umsetzens der Stickoxide berücksichtigt wird. Der Stickoxidumsatz ist nämlich abhängig vom Verhältnis des im Abgas enthaltenen Ammoniaks zum im Abgas enthaltenen Stickoxid. Dieses Verhältnis wird auch mit alpha bezeichnet. Durch alpha-Variation kann also die Güte der Auswertung verbessert werden, da der Umsatz von Stickoxiden von alpha abhängt. Diese Diagnose kann insbesondere im Vorfeld des thermischen Regenerierens des Partikelfilters, also in der Aufheizphase, und/oder in der abschließenden Abkühlphase durchgeführt werden.

Als weiter vorteilhaft hat es sich gezeigt, wenn beim Anwenden des vorbestimmten Zusammenhangs zwischen dem Umsetzen der Stickoxide und dem Anteil an Stickstoffdioxid an den Stickoxiden im Abgas eine an der Abgasnachbehandlungseinrichtung vorliegende Temperatur berücksichtigt wird. Das mit dem Stickoxid-Umsatzverhalten korrespondierende Verhältnis von Stickstoffdioxid zu Stickoxid ist nämlich von der Temperatur der Abgasnachbehandlungseinrichtung abhängig. Durch die Berücksichtigung der Temperatur kann also besonders genau und realitätsgetreu auf die Bildung von Stickstoffdioxid am Oxidationskatalysator rückgeschlossen werden.

Bevorzugt wird eine von der Temperatur abhängige Korrelationskurve ermittelt, welche die bei den unterschiedlichen Abgasvolumenströmen vorliegende Bildung von Stickstoffdioxid am Oxidationskatalysator berücksichtigt. Diese Korrelationskurve wird mit einer erwarteten Kurve verglichen. Durch Vergleichen der Kurven kann besonders gut auf die alterungsbedingte Veränderung der Bildung von Stickstoffdioxid am Oxidationskatalysator rückgeschlossen werden.

Schließlich hat es sich als vorteilhaft gezeigt, wenn die mit dem jeweiligen Abgasvolumenstrom durch den Oxidationskatalysator korrespondierenden Umsätze der Stickoxide in einem Fahrbetrieb erfasst werden, in welchem im Wesentlichen gleich bleibende Fahrgeschwindigkeiten und/oder im Wesentlichen gleich bleibende Lasten einer Verbrennungskraftmaschine des Fahrzeugs vorliegen. So können nämlich störende Einflüsse aufgrund stark variierender Fahrgeschwindigkeiten oder stark variierender Lasten besonders weitgehend ausgeschlossen werden. Es ist nämlich sinnvoll, die Bildung von Stickstoffdioxid in einem quasi stationären Betrieb der Verbrennungskraftmaschine zu überwachen.

Die erfindungsgemäße Abgasanlage für ein Fahrzeug umfasst einen Oxidationskatalysator und eine stromabwärts des Oxidationskatalysators angeordnete Abgasnachbehandlungseinrichtung zum Verringern eines Gehalts von Stickoxiden im Abgas durch Umsetzen der Stickoxide. Des Weiteren ist wenigstens eine Messeinrichtung zum Messen des Gehalts der Stickoxide im Abgas vorgesehen. Die Abgasanlage umfasst des Weiteren eine Steuerungseinrichtung, welche dazu ausgelegt ist, aufgrund eines vorbestimmten Zusammenhangs zwischen dem Umsetzen der Stickoxide und einem Anteil von Stickstoffdioxid an den Stickoxiden im Abgas auf die Bildung von Stickstoffdioxid an dem Oxidationskatalysator rückzuschließen. Hierfür ist die Steuerungseinrichtung zum Verarbeiten von Messwerten der wenigstens einen Messeinrichtung ausgelegt, welche das mit einem ersten Abgasvolumenstrom durch den Oxidationskatalysator korrespondierende Umsetzen der Stickoxide und das bei verändertem Abgasvolumenstrom mit der Veränderung des Abgasvolumenstroms sich ändernde Umsetzen der Stickoxide angeben. Mit einer solchen Abgasanlage ist eine besonders zuverlässige Überwachung der Bildung von Stickstoffdioxid am Oxidationskatalysator erreichbar.

Die für das erfindungsgemäße Verfahren beschriebenen Vorteile und bevorzugten Ausführungsformen gelten auch für die erfindungsgemäße Abgasanlage und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine Abgasanlage eines Fahrzeugs, bei welcher durch Variieren einer Niederdruck-Abgasrückführungsrate die Bildung von Stickstoffdioxid an einem Oxidationskatalysator beeinflusst und die damit einher gehende Umsatzänderung von Stickoxiden in einem SCR-Katalysator gemessen wird, wobei aufgrund dieser Messwerte auf die Aktivität des Oxidationskatalysators hinsichtlich der Bildung von Stickstoffdioxid rückgeschlossen wird;
- Fig. 2: schematisch die Abhängigkeit der Stickstoffdioxid-Bildung des Oxidationskatalysators von der Niederdruck-Abgasrückführungsrate und der Alterung des Oxidationskatalysators bei einer Temperatur von 200 °C;
- Fig. 3: schematisch die Abhängigkeit der Stickstoffdioxid-Bildung des Oxidationskatalysators von der Niederdruck-Abgasrückführungsrate und der Alterung des Oxidationskatalysators bei einer Temperatur von 300 °C;
- Fig. 4: die Abhängigkeit des Stickoxidumsatzes von der Temperatur am SCR-Katalysator bei unterschiedlichen Ammoniakgehalten im Abgas; und
- Fig. 5: einen Graphen mit Kurven, anhand welcher für jeweilige Temperaturen am SCR-Katalysator von der Stickoxid-Umsetzung im SCR-Katalysator auf den Anteil des Stickstoffdioxids an den Stickoxiden im Abgas rückgeschlossen werden kann.

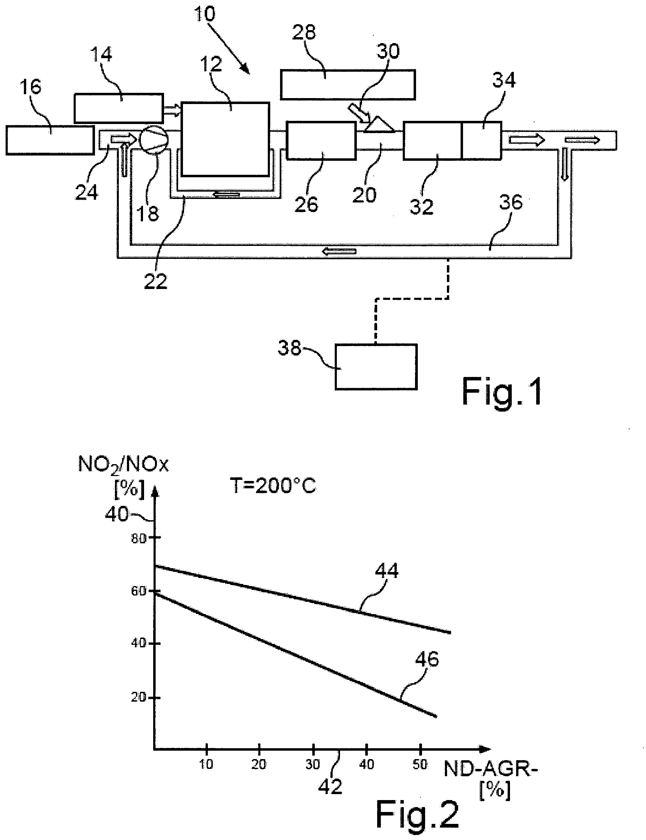

Von einem Fahrzeug, bei welchem es sich insbesondere um ein Nutzfahrzeug handeln kann, ist in Fig. 1 eine Abgasanlage 10 schematisch gezeigt. Einem Verbrennungsmotor 12 des Fahrzeugs wird Kraftstoff 14 zugeführt sowie Verbrennungsluft 16, welche mittels eines Verdichters 18 stromaufwärts des Verbrennungsmotors 12 verdichtet wird. Stromabwärts des Verbrennungsmotors 12 zweigt von einer Abgasleitung 20 der Abgasanlage 10 eine Hochdruck-Abgasrückführungsleitung 22 ab. Über diese Hochdruck-Abgasrückführungsleitung 22 wird Abgas in einen Zulufttrakt 24 rückgeführt, über dessen Einlass die Verbrennungsluft 16 angesaugt wird. Die Hochdruck-Abgasrückführungsleitung 22 mündet stromabwärts des Verdichters 18 in den Zulufttrakt 24 ein.

Stromabwärts der Abzweigung der Hochdruck-Abgasrückführungsleitung 22 von der Abgasleitung 20 ist ein Oxidationskatalysator 26 angeordnet, welcher vorliegend als Diesel-Oxidationskatalysator ausgebildet ist. Stromabwärts des Oxidationskatalysators 26 wird eine Harnstoff-Wasser-Lösung 28 mittels einer Dosiereinheit 30 in das durch die Abgasleitung 20 strömende Abgas eingebracht. Das Abgas durchströmt dann einen Partikelfilter 32, welcher vorliegend zusammen mit einem dem Partikelfilter 32 nachgeschalteten SCR-Katalysator 34 in einer gemeinsamen Baueinheit der Abgasanlage 10 angeordnet ist.

Der Partikelfilter 32 ist vorliegend bereichsweise mit einer als SCR-Katalysator fungierenden Beschichtung versehen. In dem SCR-Katalysator 34 beziehungsweise in dem beschichteten Partikelfilter 32 wird der aus dem Harnstoff der Harnstoff-Wasser-Lösung 28 stammende Ammoniak mit Stickoxiden aus dem Abgas in einer selektiven katalytischen Reduktionsreaktion (SCR = selective catalytic reduction, selektive katalytische Reduktion) zu Stickstoff und Wasser umgesetzt. Entsprechend wird mittels des SCR-Katalysators 34 der Gehalt an Stickoxiden im Abgas verringert. Der SCR-Katalysator 34 ist vorliegend vergleichsweise motornah angeordnet.

Stromabwärts des SCR-Katalysators 34 zweigt eine Niederdruck-Abgasrückführungsleitung 36 von der Abgasleitung 20 ab. Diese mündet stromaufwärts des Verdichters 18 in den Zulufttrakt 24 ein. Dem Abgang der Niederdruck-Abgasrückführungsleitung 36 kann ein so genannter Ammoniak-Sperrkatalysator vorgeschaltet sein, welcher verhindert, dass aus der Abgasanlage 10 Ammoniak in die Umgebung austritt, wenn dieser nicht vollständig im SCR-Katalysator 34 umgesetzt wird. Es kann auch anstelle eines SCR-aktiven Partikelfilters 32 ein lediglich zum Zurückhalten von Partikeln aus dem Abgas ausgebildeter Partikelfilter vorgesehen sein.

Mittels eines Steuergeräts 38 soll vorliegend im Rahmen einer On-Board-Diagnose die Aktivität des Oxidationskatalysators 26 ermittelt werden, also dessen Fähigkeit, Stickstoffdioxid zu bilden. Der Anteil an Stickstoffdioxid im Abgas stromabwärts des Oxidationskatalysators 26 hat nämlich einen Einfluss darauf, wie gut der SCR-Katalysator 34 die Stickoxide aus dem Abgas zu Stickstoff und Wasser umsetzen kann. Diese Konversionsrate, welche mit dem SCR-Katalysator 34 und vorliegend mit dem beschichteten Partikelfilter 32 erreichbar ist, wird mittels (nicht gezeigter) Stickoxid-Sensoren gemessen, deren Messwerte dem Steuergerät 38 übermittelt werden.

Die Bildung von Stickstoffdioxid am Oxidationskatalysator 26 wird vorliegend durch eine Veränderung der Raumgeschwindigkeit beeinflusst. Die Raumgeschwindigkeit beschreibt das Verhältnis des Abgasvolumenstroms durch den Oxidationskatalysator 26 im Verhältnis zum Volumen des Oxidationskatalysators 26. Eine Erhöhung des Abgasvolumenstroms und damit eine Erhöhung der Raumgeschwindigkeit bedingt eine Verringerung der Stickstoffdioxidbildung am Oxidationskatalysator 26. Umgekehrt führt eine Verringerung der Raumgeschwindigkeit zu einer Erhöhung der Stickstoffdioxid-Bildung am Oxidationskatalysator 26. Der Oxidationskatalysator 26 reagiert jedoch auch in Bezug auf die Stickstoffdioxidbildung auf die Temperatur sehr sensibel. So führt eine Temperaturabsenkung am Oxidationskatalysator 26 ebenfalls zu einer Reduzierung der Stickstoffdioxidbildung. Bei besonders hohen Temperaturen, etwa bei Temperaturen von mehr als 300 °C ist die maximale Stickstoffdioxidbildung durch das thermodynamische Gleichgewicht begrenzt.

Vorliegend wird die Raumgeschwindigkeit erhöht, indem die Niederdruck-Abgasrückführungsrate, also der durch die Niederdruck-Abgasrückführungsleitung 36 strömende Anteil an der gesamten Abgasrückführung, erhöht wird. Bei konstanter Gesamt-Abgasrückführungsrate hat nämlich eine Erhöhung der Niederdruck-Abgasrückführungsrate zulasten der Hochdruck-Abgasrückführungsrate zur Folge, dass weniger Abgas stromaufwärts des Oxidationskatalysators 26 abgezweigt wird. Dann strömt dem Oxidationskatalysator 26 mehr Abgas zu, und die Raumgeschwindigkeit erhöht sich. Ein Erhöhen des Anteils der Niederdruck-Abgasrückführungsrate bei gegebener Gesamt-Abgasrückführungsrate kann auch durch Verringern des Anteils der Hochdruck-Abgasrückführungsrate an der Gesamt-Abgasrückführungsrate erfolgen. Als weiteren Vorteil bietet eine konstant gehaltene Gesamt-Abgasrückführ-Rate eine wenigstens annähernd konstante NOx-Rohemission während eines Diagnoseprozesses.

Vorliegend wird also durch Variation des Niederdruck-Abgasrückführungsanteils an der Gesamt-Abgasrückführungsrate die Stickstoffdioxidbildung am Oxidationskatalysator 26 beeinflusst. Dadurch verändert sich das mittels der Stickoxidsensoren messbare Stickoxid-Umsatzverhalten des SCR-Katalysators 34.

In Fig. 2 ist schematisch der Zusammenhang zwischen der Stickstoffdioxidbildung in Abhängigkeit von dem Anteil der Niederdruck-Abgasrückführungsrate an der Gesamt-Abgasrückführungsrate und dem Alterungszustand des Oxidationskatalysators 26 für eine Temperatur T von 200 °C veranschaulicht. Hierbei ist auf einer Ordinate 40 der Anteil des Stickstoffdioxids an den Stickoxiden im Abgas dargestellt, und auf einer Abszisse 42 die Niederdruck-Abgasrückführungsrate in Prozent der Gesamt-Abgasrückführungsrate.

Eine erste Gerade 44 beschreibt das Verhalten des nicht gealterten, also seine volle Stickstoffdioxid-Bildungsfähigkeit aufweisenden Oxidationskatalysators 26. Hier ist zu beobachten, dass mit zunehmender Niederdruck-Abgasrückführungsrate und damit einhergehend zunehmender Raumgeschwindigkeit der Anteil an Stickstoffdioxid im Abgas absinkt, welches dem SCR-Katalysator 34 zugeführt wird. Eine weitere Gerade 46 veranschaulicht das Verhalten des gealterten des Oxidationskatalysators 26 bei 200 °C. Hier sind generell niedrigere Gehalte an Stickstoffdioxid erzielbar, und diese Gehalte nehmen mit zunehmender Niederdruck-Abgasrückführungsrate stärker ab als beim ungealterten Oxidationskatalysator 26.

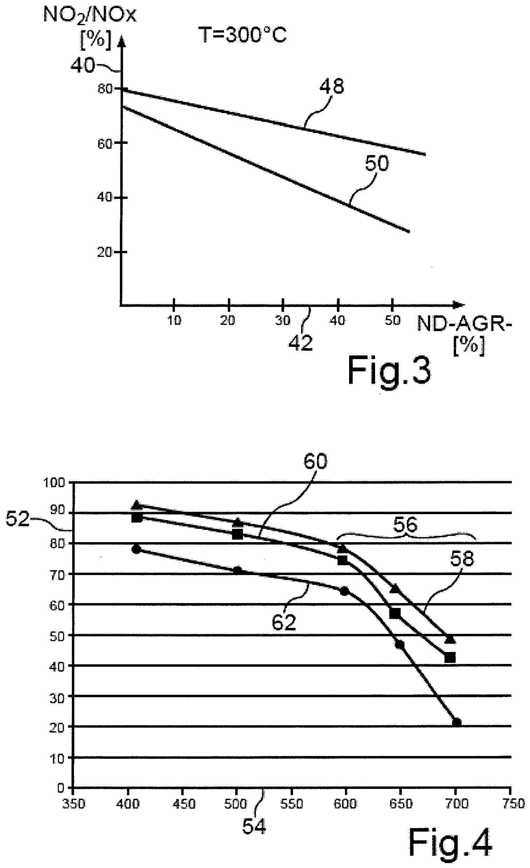

Fig. 3 zeigt einen analogen Zusammenhang anhand einer entsprechenden Gerade 48 für den nicht gealterten Oxidationskatalysator 26 und einer darunter liegenden, stärker abfallenden Gerade 50 für den gealterten des Oxidationskatalysator 26 bei einer Temperatur von 300 °C.

Aus Fig. 2 und Fig. 3 ist ersichtlich, dass im Fall von hohen Niederdruck-Abgasrückführungsraten, also insbesondere bei einem Anteil der Niederdruck-Abgasrückführungsrate von 50 %, jedoch schon bei einem Anteil der Niederdruck-Abgasrückführungsrate von mehr als 30 %, sich der gebildete Stickstoffdioxidanteil stromabwärts des Oxidationskatalysator 26 um bis zu 20 % gegenüber einer Einstellung eines Anteils der Niederdruck-Abgasrückführungsrate von ca. 20 % der Gesamt-Abgasrückführungsrate verringert.

Dies gilt insbesondere für den gealterten Oxidationskatalysator 26, dessen Verhalten durch die Geraden 46, 50 in Fig. 2 und Fig. 3 veranschaulicht ist. Die Konvertierung von Stickoxiden am SCR-Katalysator 34 fällt dann aufgrund der hohen Niederdruck-Abgasrückführungsraten auf einen niedrigeren Wert, und zwar aufgrund des ungünstigeren Verhältnisses von Stickstoffdioxid zu den Stickoxiden im Abgas. Zusätzlich wirkt es sich auf die Konvertierung der Stickoxide im SCR-Katalysator 34 negativ aus, dass sich bei der Einstellung hoher Niederdruck-Abgasrückführungsraten am SCR-Katalysator 34 eine höhere Raumgeschwindigkeit einstellt.

Durch Variation der Niederdruck-Abgasrückführungsrate wird also die Stickstoffdioxidbildung am Oxidationskatalysator 26 beeinflusst. Die davon abhängige Konversion von Stickoxiden am SCR-Katalysator 34 wird mithilfe der Stickoxidsensoren gemessen. Aufgrund der Abhängigkeit der Aktivität des SCR-Katalysators 34 vom Stickstoffdioxidanteil im Abgas kann dann auf die Stickstoffdioxid-Bildungsaktivität des Oxidationskatalysators 26 rückgeschlossen werden.

Es kann auch mittels einer variierenden Aufteilung der Hochdruck- und der Niederdruck-Abgasrückführungsanteile die Raumgeschwindigkeit am des Oxidationskatalysator 26 in einem eingeschränkten Lastbereich nahezu konstant gehalten werden. Dies bietet günstige Rahmenbedingungen für verschiedene On-Board-Diagnose-Ansätze im Abgasnachbehandlungssystem. Es kann nämlich bei einer Erhöhung der Last, welche an sich mit einem erhöhten Abgasvolumenstrom einhergeht, die Niederdruck-Abgasrückführungsrate verringert und die Hochdruck-Abgasrückführungsrate erhöht werden. In der Folge nimmt dann der Abgasvolumenstrom durch den Oxidationskatalysator 26 nicht zu.

Vorliegend wird sichergestellt, dass die von der Alterung des SCR-Katalysators 34 abhängige Aktivität desselben bei der Überwachung der Stickstoffdioxid-Bildungsfähigkeit des Oxidationskatalysators 26 berücksichtigt wird. Dies geschieht, indem die Bestimmung des Umsatzes von Stickoxiden am SCR-Katalysator 34 unabhängig von äußeren Einflussfaktoren wie dem Stickstoffdioxid-Anteil in dem diesem zugeführten Abgas und dem gespeicherten Ammoniak durchgeführt wird. Vorliegend wird nämlich der Umsatz von Stickoxiden am SCR-Katalysator 34 bestimmt, während eine Regeneration des Partikelfilters 32 vorgenommen wird, beziehungsweise zumindest bei Rahmenbedingungen, insbesondere bei Temperaturen am Partikelfilter 32 und am SCR-Katalysator 34, wie sie sich im Verlauf einer Partikelfilter-Regeneration einstellen.

Fig. 4 veranschaulicht die Abhängigkeit des Umsatzes von Stickoxiden am SCR-Katalysator 34 von der Temperatur T eingangsseitig des Partikelfilters 32. Hierbei ist auf einer Ordinate 52 der Stickoxid-Umsatz in Prozent angegeben und auf einer Abszisse 54 die Temperatur T in °C vor dem Eingang des Partikelfilters 32. Aus Fig. 4 ist ersichtlich, dass bei Temperaturen von mehr als 400 °C und insbesondere bei Temperaturen von mehr als 500 °C die Umsätze von Stickoxiden stark absinken. Ein Bereich 56 im in Fig. 4 gezeigten Graphen umfasst Messpunkte, welche während der Partikelfilter-Regeneration ermittelt wurden. Hieraus geht hervor, dass während des thermischen Regenerierens des Partikelfilters 32 der Stickoxid-Umsatz des SCR-Katalysators 34 mit zunehmender Temperatur besonders stark absinkt.

Aus Fig. 4 ist des Weiteren ersichtlich, welchen Einfluss das Verhältnis von Ammoniak zu Stickoxid, welches auch als alpha bezeichnet wird, auf den Stickoxid-Umsatz hat. Eine erste Kurve 58 beschreibt das Umsatzverhalten des SCR-Katalysators 34 bei einem Verhältnis von Ammoniak zu Stickoxid von 2, eine zweite Kurve 60 bei einem alpha von 1,5 und eine dritte Kurve 62 bei einem alpha von 1. Durch diese Berücksichtigung des Ammoniakanteils ergibt sich eine besonders genaue, die tatsächlichen Verhältnisse wiedergebende Ermittlung des Stickoxid-Umsatzes am SCR-Katalysator 34.

Bei den während der Partikelfilter-Regeneration vorliegenden hohen Temperaturen, insbesondere bei Temperaturen von mehr als 500 °C besitzt der SCR-Katalysator 34 keine Speicherfähigkeit für Ammoniak mehr, und thermodynamisch liegt das Stickstoffdioxid/Stickstoffmonoxid-Gleichgewicht gemäß der die Stickstoffdioxidbildung am Oxidationskatalysator 26 beschreibenden Reaktionsgleichung:

NO + 1/2 O2 ↔ NO₂

zu nahezu 100 % auf der Seite des Stickstoffmonoxids.

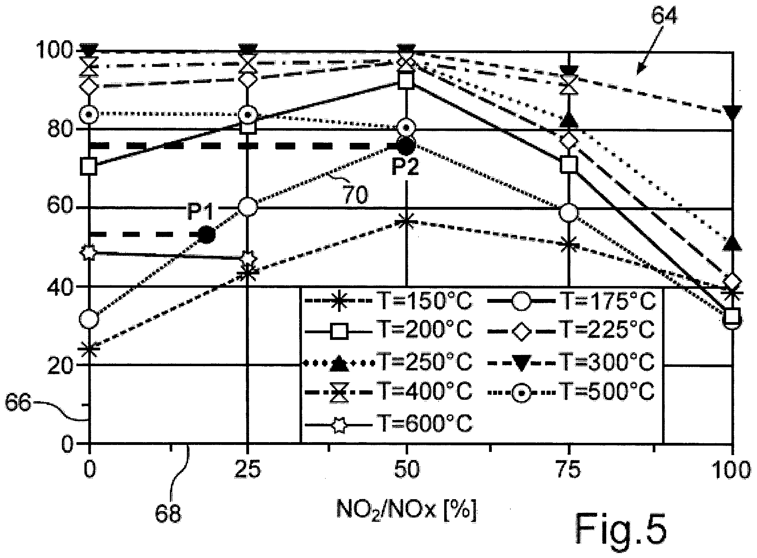

Durch eine Umsatzbestimmung bei Temperaturen von mehr als 500 °C stromaufwärts des Partikelfilters 32 kann somit die Aktivität des SCR-Katalysators 34 ohne störende Rahmenbedingungen ermittelt werden. Mit der störungsfrei ermittelten Aktivität des SCR-Katalysators 34 erfolgt dann eine Korrelation des Stickoxid-Umsatzes zum Zwecke der Diagnose der Stickstoffdioxid-Bildung am Oxidationskatalysator 26. Dies wird anhand von Fig. 5 veranschaulicht.

In einem in Fig. 5 gezeigten Graphen ist eine Schar 64 von Kurven abgebildet, welche den Zusammenhang zwischen der Stickoxid-Konvertierung und dem Anteil des Stickstoffdioxids an den Stickoxiden im Abgas für unterschiedliche Temperaturen angeben. Entsprechende Kurvenscharen sind im Steuergerät 38 der Abgasanlage 10 abgelegt.

Die Stickoxid-Konvertierung in Prozent ist im Graphen auf einer Ordinate 66 aufgetragen und der Anteil an Stickstoffdioxid an den Stickoxiden in Prozent auf einer Abszisse 68. Beispielhaft sei aus der Schar 64 der Kurven eine Kurve 70 herausgegriffen, welche die Zusammenhänge bei einer Temperatur T von 175 °C beschreibt.

Die störungsfrei ermittelte Aktivität des SCR-Katalysators 34 wird beispielsweise bei einem Niederdruck-Abgasrückführungsanteil an der Gesamt-Abgasrückführungsrate von 50 % über eine gewisse Zeitspanne erfasst, indem der innerhalb dieser Zeitspanne gemittelte Stickoxid-Umsatz bestimmt wird. Entsprechend der Kurve 70 wird bei dieser hohen Niederdruck-Abgasrückführungsrate eine Stickoxid-Konversion von ca. 50 % ermittelt. Diese NOX-Konversion von 50 % entspricht einem Punkt P1 auf der Kurve 70. Aufgrund des durch die Kurve 70 beschriebenen Zusammenhangs zwischen der Stickoxid-Konversion und dem Anteil an Stickstoffdioxid an den Stickoxiden ergibt sich ein Stickstoffdioxidanteil von etwa 20 % für den Punkt P1.

Bei derselben Temperatur von 175 °C wird dann bei Vorliegen einer niedrigen Niederdruck-Abgasrückführungsrate von beispielsweise ca. 20 % an der Gesamt-Abgasrückführungsrate eine Stickoxid-Konversion von ca. 75 % ermittelt. Dies entspricht, wie durch einen Punkt P2 auf der Kurve 70 wiedergegeben, einem Stickstoffdioxidanteil von ca. 50 %. Aus zwei oder mehr solchen Punkten P1, P2 wird dann eine Korrelationsgerade erstellt, wie sie in Fig. 2 und Fig. 3 durch die Geraden 44, 46, 48, 50 veranschaulicht sind.

Wenn die gemessenen Konversionsraten niedriger ausfallen als entsprechend erwartete Stickoxid-Konversionen und wenn zugleich die Aktivität des SCR-Katalysators 34 noch in Ordnung ist, so lässt dies den Rückschluss zu, dass aufgrund einer Alterung des Oxidationskatalysators 26 weniger Stickstoffdioxid an diesem gebildet wird als dies bei einem ungealterten System der Fall ist. Entsprechend liegt die durch die Punkte P1 und P2 sowie gegebenenfalls weitere Messungen ermittelte Korrelationsgerade, welche in Fig. 2 und Fig. 3 schematisch durch die jeweilige Gerade 46, 50 veranschaulicht ist, unterhalb der Geraden 44, 48 für das jeweils nicht gealterte System.

Die jeweilige Korrelationsgerade gibt also das Verhalten des gealterten Oxidationskatalysators 26 an. Wird eine zu geringe Bildung von Stickstoffdioxid am Oxidationskatalysator 26 ermittelt, so wird der Oxidationskatalysator 26 als defekt erkannt.

Durch das Abgleichen der temperaturabhängigen Korrelationsgeraden mit den für den ungealterten Oxidationskatalysator 26 erwarteten Geraden 44, 48 kann so besonders gut eine alterungsbedingte Verschlechterung der Stickstoffdioxidbildung am Oxidationskatalysator 26 ermittelt werden. Dies erfolgt durch Beeinflussung der Stickstoffdioxid-bildung am Oxidationskatalysator 26, indem die Niederdruck-Abgasrückführungsrate verändert wird.

## Patentansprüche

1. Verfahren zum Überwachen der Bildung von Stickstoffdioxid an einem in einer Abgasanlage (10) eines Fahrzeugs angeordneten Oxidationskatalysator (26), bei welchem mittels einer Abgasnachbehandlungseinrichtung (34) ein Gehalt von Stickoxiden im Abgas durch Umsetzen der Stickoxide verringert und der Gehalt der Stickoxide im Abgas gemessen wird,
**dadurch gekennzeichnet, dass**
das mit einem ersten Abgasvolumenstrom durch den Oxidationskatalysator (26) korrespondierende Umsetzen der Stickoxide mittels der Abgasnachbehandlungseinrichtung (34) erfasst wird, der Abgasvolumenstrom verändert und das mit der Veränderung des Abgasvolumenstroms sich ändernde Umsetzen der Stickoxide mittels der Abgasnachbehandlungseinrichtung (34) erfasst wird, wobei anhand des jeweiligen Umsetzens der Stickoxide bei den unterschiedlichen Abgasvolumenströmen durch den Oxidationskatalysator (26) aufgrund eines vorbestimmten Zusammenhangs zwischen dem Umsetzen der Stickoxide und einem Anteil von Stickstoffdioxid an den Stickoxiden im Abgas auf die Bildung von Stickstoffdioxid an dem Oxidationskatalysator (26) rückgeschlossen wird, wobei der Abgasvolumenstrom durch den Oxidationskatalysator (26) verändert wird, indem ein Anteil einer Niederdruck-Abgasrückführungsrate an einer Gesamt-Abgasrückführungsrate, welche sich aus einer Hochdruck-Abgasrückführungsrate und der Niederdruck-Abgasrückführungsrate zusammensetzt, verändert wird.

2. Verfahren nach Anspruch 1,
**dadurch gekennzeichnet, dass**
bei wenigstens annähernd konstanter Gesamt- Abgasrückführungsrate die Niederdruck-Abgasrückführungsrate erhöht wird.

3. Verfahren nach Anspruch 1,
**dadurch gekennzeichnet, dass**
bei wenigstens annähernd konstanter Gesamt- Abgasrückführungsrate die Hochdruck-Abgasrückführungsrate verringert wird.

4. Verfahren nach einem der Ansprüche 1 bis 3,
**dadurch gekennzeichnet, dass**
durch Vergleichen der ermittelten Bildung von Stickstoffdioxid an dem Oxidationskatalysator (26) mit einer für die jeweiligen Abgasvolumenströme erwarteten Bildung von Stickstoffdioxid auf einen Alterungszustand des Oxidationskatalysators (26) rückgeschlossen wird.

5. Verfahren nach einem der Ansprüche 1 bis 4,
**dadurch gekennzeichnet, dass**
das Umsetzen der Stickoxide bei den unterschiedlichen Abgasvolumenströmen bestimmt wird, während eine Temperatur an der Abgasnachbehandlungseinrichtung (34) vorliegt, wie sie sich beim thermischen Regenerieren eines in der Abgasanlage angeordneten Partikelfilters (32) an der Abgasnachbehandlungseinrichtung (34) einstellt.

6. Verfahren nach einem der Ansprüche 1 bis 5,
**dadurch gekennzeichnet, dass**
das Umsetzen der Stickoxide bei den unterschiedlichen Abgasvolumenströmen im Anschluss an ein thermisches Regenerieren eines in der Abgasanlage angeordneten Partikelfilters (32) bestimmt wird.

7. Verfahren nach Anspruch 6,
**dadurch gekennzeichnet, dass**
ein vor dem thermischen Regenerieren oder im Anschluss an das thermische Regenerieren des Partikelfilters (32) im Abgas vorliegender Gehalt an Ammoniak im Abgas beim Erfassen des Umsetzens der Stickoxide berücksichtigt wird.

8. Verfahren nach einem der Ansprüche 1 bis 7,
**dadurch gekennzeichnet, dass**
beim Anwenden des vorbestimmten Zusammenhangs zwischen dem Umsetzen der Stickoxide und dem Anteil von Stickstoffdioxid an den Stickoxiden im Abgas eine Temperatur an der Abgasnachbehandlungseinrichtung (34) berücksichtigt wird.

9. Verfahren nach Anspruch 8,
**dadurch gekennzeichnet, dass**
eine von der Temperatur abhängige Korrelationskurve (46, 50) ermittelt wird, welche die bei den unterschiedlichen Abgasvolumenströmen vorliegende Bildung von Stickstoffdioxid am Oxidationskatalysator (26) berücksichtigt, wobei die Korrelationskurve (46, 50) mit einer erwarteten Kurve (44, 48) verglichen wird.

10. Verfahren nach einem der Ansprüche 1 bis 9,
**dadurch gekennzeichnet, dass**
die mit dem jeweiligen Abgasvolumenstrom durch den Oxidationskatalysator (26) korrespondierenden Umsätze der Stickoxide in einem Fahrbetrieb erfasst werden, in welchem im Wesentlichen gleichbleibende Fahrgeschwindigkeiten und/oder im Wesentlichen gleichbleibende Lasten einer Verbrennungskraftmaschine (12) des Fahrzeugs vorliegen.

11. Abgasanlage für ein Fahrzeug, mit einem in einer Abgasleitung (20) angeordneten Oxidationskatalysator (26), einer stromabwärts des Oxidationskatalysators (26) in der Abgasleitung (20) angeordneten Abgasnachbehandlungseinrichtung (34) zum Verringern eines Gehalts von Stickoxiden im Abgas durch Umsetzen der Stickoxide, einer stromaufwärts des Oxidationskatalysators (26) von der Abgasleitung (20) abzweigenden Hochdruck-Abgasrückführungsleitung (22), einer stromabwärts der Abgasnachbehandlungseinrichtung (34) von der Abgasleitung (20) abzweigenden Niederdruck-Abgasrückführungsleitung (36) und mit wenigstens einer Messeinrichtung zum Messen des Gehalts der Stickoxide im Abgas, wobei die Abgasanlage eine Steuerungseinrichtung (38) umfasst, welche dazu ausgelegt ist, aufgrund eines vorbestimmten Zusammenhangs zwischen dem Umsetzen der Stickoxide und einem Anteil von Stickstoffdioxid an den Stickoxiden im Abgas auf die Bildung von Stickstoffdioxid an dem Oxidationskatalysator (26) rückzuschließen, wobei die Steuerungseinrichtung hierfür zum Verarbeiten von Messwerten der wenigstens einen Messeinrichtung ausgelegt ist, welche das mit einem ersten Abgasvolumenstrom durch den Oxidationskatalysator (26) korrespondierende Umsetzen der Stickoxide und das bei einem mittels Variation eines Niederdruck-Abgasrückführungsanteils an einer Gesamt-Abgasrückführungsrate verändertem Abgasvolumenstrom mit der Veränderung des Abgasvolumenstroms sich ändernde Umsetzen der Stickoxide angeben.

## Claims

1. Method for monitoring the formation of nitrogen dioxide at an oxidation catalytic converter (26) arranged in an exhaust gas system (10) of a vehicle, wherein, by means of an exhaust gas aftertreatment device (34), a content of nitrogen oxides in the exhaust gas is reduced by converting the nitrogen oxides and the content of the nitrogen oxides in the exhaust gas is measured,
**characterised in that**
the conversion of the nitrogen oxides by means of the exhaust gas aftertreatment device (34) that corresponds to a first exhaust gas volume flow through the oxidation catalytic converter (26) is measured, the exhaust gas volume flow is varied and a changing of the conversion of the nitrogen oxides by means of the exhaust gas aftertreatment device (34) occurring with the variation of the exhaust gas volume flow is determined, wherein, based on the respective conversion of the nitrogen oxides in the different exhaust gas volume flows through the oxidation catalytic converter (26), the formation of nitrogen dioxide at the oxidation catalytic converter (26) is inferred based on a predetermined relationship between the conversion of the nitrogen oxides and a proportion of nitrogen dioxide in the nitrogen oxides in the exhaust gas, wherein the exhaust gas volume flow through the oxidation catalytic converter (26) is varied by varying a proportion of a low-pressure exhaust gas recirculation rate of a total exhaust gas recirculation rate, which is made up of a high-pressure exhaust gas recirculation rate and the low-pressure exhaust gas recirculation rate.

2. Method according to claim 1,
**characterised in that**
the low-pressure exhaust gas recirculation rate is increased at an at least approximately constant total exhaust gas recirculation rate.

3. Method according to claim 1,
**characterised in that**
the high-pressure exhaust gas recirculation rate is reduced at an at least approximately constant total exhaust gas recirculation rate.

4. Method according to one of claims 1 to 3,
**characterised in that**
an ageing state of the oxidation catalytic converter (26) is inferred by comparing the ascertained formation of nitrogen dioxide at the oxidation catalytic converter (26) with a formation of nitrogen dioxide expected for the respective exhaust gas volume flows.

5. Method according to one of claims 1 to 4,
**characterised in that**
the conversion of the nitrogen oxides at the different exhaust gas volume flows is determined while a temperature is present at the exhaust gas aftertreatment device (34) such as that established at the exhaust gas aftertreatment device (34) during the thermal regeneration of a particulate filter (32) arranged in the exhaust gas system.

6. Method according to one of claims 1 to 5,
**characterised in that**
the conversion of the nitrogen oxides at the different exhaust gas volume flows is determined following a thermal regeneration of a particulate filter (32) arranged in the exhaust gas system.

7. Method according to claim 6,
**characterised in that**
an ammonia content in the exhaust gas before the thermal regeneration or after the thermal regeneration of the particulate filter (32) is taken into account when determining the conversion of the nitrogen oxides.

8. Method according to one of claims 1 to 7,
**characterised in that**
a temperature at the exhaust gas aftertreatment device (34) is taken into account when applying the predetermined relationship between the conversion of the nitrogen oxides and the proportion of nitrogen dioxide in the nitrogen oxides in the exhaust gas.

9. Method according to claim 8,
**characterised in that**
a temperature-dependent correlation curve (46, 50), which takes into account the formation of nitrogen dioxide at the oxidation catalytic converter (26) at the different exhaust gas volume flows, is determined, wherein the correlation curve (46, 50) is compared with an expected curve (44, 48).

10. Method according to one of claims 1 to 9,
**characterised in that**
the conversion rates of the nitrogen oxides corresponding to the respective exhaust gas volume flow through the oxidation catalytic converter (26) are determined during a driving mode in which substantially constant driving speeds and / or substantially constant loads of an internal combustion engine (12) of the vehicle are present.

11. Exhaust gas system for a vehicle, having an oxidation catalytic converter (26) arranged in an exhaust gas pipe (20), an exhaust gas aftertreatment device (34) arranged in the exhaust gas pipe (20) downstream of the oxidation catalytic converter (26) for reducing a content of nitrogen oxides in the exhaust gas by converting the nitrogen oxides, a high-pressure exhaust gas recirculation pipe (22) branching off the exhaust gas pipe (20) upstream of the oxidation catalytic converter (26), a low-pressure exhaust gas recirculation pipe (36) branching off the exhaust gas pipe (20) downstream of the exhaust gas aftertreatment device (34) and at least one measuring device for measuring the content of the nitrogen oxides in the exhaust gas, wherein the exhaust gas system comprises a control device (38) which is designed to infer the formation of nitrogen dioxide at the oxidation catalytic converter (26) based on a predetermined relationship between the conversion of the nitrogen oxides and a proportion of nitrogen dioxide in the nitrogen oxides in the exhaust gas, wherein the control device for this is designed to process measured values from the at least one measuring device which specify the conversion of the nitrogen oxides corresponding to a first exhaust gas volume flow through the oxidation catalytic converter (26) and the changing conversion of the nitrogen oxides occurring with the variation of the exhaust gas volume flow caused by varying a proportion of a low-pressure exhaust gas recirculation of a total exhaust gas recirculation rate.

## Revendications

1. Procédé de surveillance de la formation de dioxyde d'azote sur un catalyseur d'oxydation (26) disposé dans un système d'échappement (10) d'un véhicule, selon ledit procédé, au moyen d'un dispositif de post-traitement des gaz d'échappement (34), une teneur en oxydes d'azote dans les gaz d'échappement est réduite par transformation des oxydes d'azote et la teneur en oxydes d'azote dans les gaz d'échappement est mesurée, **caractérisé en ce que** la transformation des oxydes d'azote correspondant à un premier débit volumique des gaz d'échappement traversant le catalyseur d'oxydation (26) est détectée, le débit volumique des gaz d'échappement est modifié, et la transformation des oxydes d'azote, variant avec la modification du débit volumique des gaz d'échappement, est détectée au moyen du dispositif de post-traitement des gaz d'échappement (34), sur la base de la transformation respective des oxydes d'azote, dans le cas de différents débits volumiques de gaz d'échappement traversant le catalyseur d'oxydation (26), on déduit d'un rapport prédéfini entre la transformation des oxydes d'azote et une fraction de dioxyde d'azote (26) sur les oxydes d'azote dans les gaz d'échappement que du dioxyde d'azote s'est formé sur le catalyseur d'oxydation (26), le débit volumique de gaz d'échappement étant modifié en traversant le catalyseur d'oxydation (26), du fait qu'une fraction d'un taux de recyclage de gaz d'échappement basse pression sur un taux de recyclage de gaz d'échappement total est modifié, qui est constitué d'un taux de recyclage de gaz d'échappement haute pression et d'un taux de recyclage de gaz d'échappement basse pression.

2. Procédé selon la revendication 1, **caractérisé en ce que** lorsque le taux de recyclage des gaz d'échappement est au moins approximativement constant, le taux de recyclage des gaz d'échappement basse pression augmente.

3. Procédé selon la revendication 1, **caractérisé en ce que** lorsque le taux de recyclage des gaz d'échappement total est au moins approximativement constant, le taux de recyclage des gaz d'échappement haute pression diminue.

4. Procédé selon l'une quelconque des revendications 1 à 3, caractérisé en ce de la comparaison de la formation déterminée de dioxyde d'azote sur le catalyseur d'oxydation (26) avec une formation prévue de dioxyde d'azote pour les débits volumiques de gaz d'échappement respectifs on peut déduire d'un état de vieillissement du catalyseur d'oxydation (26).

5. Procédé selon l'une quelconque des revendications précédentes 1 à 4, **caractérisé en ce qu'**il est déterminé la modification d'oxyde d'azote dans le cas de différents débits volumiques de gaz d'échappement tandis qu'une température est présente dans le dispositif de post-traitement des gaz d'échappement (34) comme elle se règle lors de la régénération thermique d'un filtre à particules (32) disposé dans le système d'échappement dans le dispositif de post-traitement des gaz d'échappement (34).

6. Procédé selon l'une quelconque des revendications 1 à 5, **caractérisé en ce qu'**il est déterminé la modification de l'oxyde d'azote dans le cas de différents débits volumiques de gaz d'échappement à la suite d'une régénération thermique d'un filtre à particules (32) disposé dans le système d'échappement.

7. Procédé selon la revendication 6, **caractérisé en ce qu'**une teneur en ammoniac présente dans le gaz d'échappement avant la régénération thermique ou à la suite de la régénération thermique du filtre à particules (32) est prise en compte lors de la détection de la modification de l'oxyde d'azote.

8. Procédé selon l'une quelconque des revendications précédentes 1 à 7, **caractérisé en ce que** lors de l'utilisation du rapport prédéfini entre la transformation de l'oxyde d'azote et la fraction de dioxyde d'azote dans les oxydes d'azote dans le gaz d'échappement, on prend en compte une température dans le dispositif de post-traitement de gaz d'échappement.

9. Procédé selon la revendication 8, **caractérisé en ce qu'**il est déterminé une courbe de corrélation (46, 50) en fonction de la température, laquelle tient compte de la formation existante de dioxyde d'azote dans le catalyseur d'oxydation (26) dans le cas de différents débits volumiques de gaz d'échappement, la courbe de corrélation (46, 50) étant comparée à une courbe prévue (44, 48).

10. Procédé selon l'une quelconque des revendications 1 à 9, **caractérisé en ce que** les conversions de l'oxyde d'azote correspondants au débit volumique de gaz d'échappement respectif traversant le catalyseur d'oxydation (26) dans un fonctionnement sont détectées, pendant ledit fonctionnement sont présentes des vitesses de déplacement essentiellement constantes et/ou des charges essentiellement constantes d'un moteur à combustion interne (12) du véhicule automobile.

11. Installation de gaz d'échappement pour un véhicule automobile, comprenant un catalyseur d'oxydation (26) disposé dans une conduite d'échappement (20), un dispositif de post-traitement des gaz d'échappement (34) disposé en aval du catalyseur d'oxydation (26) dans la conduite d'échappement (20) destiné à réduire une teneur en oxydes d'azote dans le gaz d'échappement par modification de l'oxyde d'azote, une conduite de recyclage de gaz d'échappement basse pression (22) en aval du catalyseur par oxydation (26) déviée de la conduite d'échappement (20), une conduite de recyclage de gaz d'échappement basse pression (36) en aval du dispositif de post-traitement de gaz d'échappement (34) déviée de la conduite d'échappement (20) et au moins un dispositif de mesure destiné à mesurer la teneur en oxyde d'azote dans le gaz d'échappement, l'installation de gaz d'échappement comprend un dispositif de commande (38) qui est conçu pour permettre de déduire d'un rapport prédéfini entre la transformation des oxydes et une fraction de dioxyde d'azote (26) sur les oxydes d'azote dans les gaz d'échappement que du dioxyde d'azote s'est formé sur le catalyseur d'oxydation (26), le dispositif de commande étant ainsi conçu pour traiter les valeurs de mesure dudit dispositif de mesure, qui indiquent la transformation de l'oxyde d'azote correspondant à un premier débit volumique de gaz d'échappement et à la transformation de l'oxyde d'azote se modifiant en cas d'un débit volumique de gaz d'échappement modifié au moyen d'une variation d'une fraction de recyclage de gaz d'échappement basse pression sur un taux de recyclage de gaz d'échappement total.
